(19) Europäisches Patentamt
European Patent Office
Office européen des brevets

(11) **EP 1 500 222 B1**

(12) **EUROPÄISCHE PATENTSCHRIFT**

(45) Veröffentlichungstag und Bekanntmachung des Hinweises auf die Patenterteilung:
**05.12.2007 Patentblatt 2007/49**

(21) Anmeldenummer: **03747388.1**

(22) Anmeldetag: **09.04.2003**

(51) Int Cl.:
***H04L 1/18*** *(2006.01)*

(86) Internationale Anmeldenummer:
**PCT/DE2003/001170**

(87) Internationale Veröffentlichungsnummer:
**WO 2003/094416 (13.11.2003 Gazette 2003/46)**

(54) **VERFAHREN UND VORRICHTUNG ZUR VERWALTUNG EINES SPEICHERS ZUR ZWISCHENSPEICHERUNG VON DATENBLÖCKEN BEI ARQ-ÜBERTRAGUNGSSYSTEMEN**

METHOD AND DEVICE FOR MANAGING A MEMORY USED FOR INTERMEDIATE STORAGE OF DATA BLOCKS IN ARQ TRANSMISSION SYSTEMS

PROCEDE ET DISPOSITIF DE GESTION D'UNE MEMOIRE DESTINEE A LA MEMORISATION TEMPORAIRE DE BLOCS DE DONNEES DANS DES SYSTEMES DE TRANSMISSION ARQ

(84) Benannte Vertragsstaaten:
**DE FR GB**

(30) Priorität: **29.04.2002 DE 10219099**

(43) Veröffentlichungstag der Anmeldung:
**26.01.2005 Patentblatt 2005/04**

(73) Patentinhaber: **Infineon Technologies AG**
**81669 München (DE)**

(72) Erfinder: **BECKER, Burkhard**
**85737 Ismaning (DE)**

(74) Vertreter: **Lange, Thomas et al**
**Patentanwälte**
**Lambsdorff & Lange,**
**Dingolfinger Strasse 6**
**81673 München (DE)**

(56) Entgegenhaltungen:
**EP-A- 1 168 702          EP-A- 1 168 703**
**WO-A-01/43331**

- **KALLEL S ET AL: "AN ADAPTIVE HYBRID ARQ SCHEME" WIRELESS PERSONAL COMMUNICATIONS, KLUWER ACADEMIC PUBLISHERS, NL, Bd. 12, Nr. 3, März 2000 (2000-03), Seiten 297-311, XP000891169 ISSN: 0929-6212**

**Beschreibung**

Die Erfindung betrifft ein Verfahren und eine Vorrichtung zur Verwaltung von bei wiederholten Aussendungen eines zu decodierenden Datenblocks erhaltenen Datenblock-Versionen in einem Empfänger.

Bei der Übertragung von Daten über einen gestörten Kanal wird angestrebt, mit möglichst wenig Aufwand einen möglichst hohen Grad an Fehlerfreiheit der erhaltenen Daten im Empfänger zu erreichen. Es gibt zwei komplementäre Ansätze, um dieses Ziel zu erreichen: Ein erster Ansatz besteht darin, dass auszusendende Signal durch geeignete Maßnahmen wie Kanalcodierung und Verschachtelung so übertragungsfest zu machen, dass auch bei gestörtem Kanal eine Decodierung des Signals mit guter Wahrscheinlichkeit gelingt. Bei diesem Ansatz wird dem Signal vor seiner Aussendung Redundanz hinzugefügt, die eine fehlerarme Decodierung des empfangenen Signals im Empfänger ermöglicht. Der zweite Ansatz besteht darin, die empfangenen Daten im Empfänger auf Fehlerfreiheit zu überprüfen und, sofern Übertragungsfehler aufgetreten sind, eine nochmalige Übertragung der Daten anzufordern. Die wiederholte Anforderung von fehlerhaft übertragenen Datenpaketen ist als ARQ-(Automatic-Repeat-Request-)Verfahren bekannt.

Als besonders leistungsfähig haben sich Hybride-ARQ-Verfahren, bezeichnet als H-ARQ, erwiesen. Bei H-ARQ-Verfahren werden Datenblöcke, deren Übertragung fehlschlägt, nicht verworfen sondern in dem Empfänger zwischengespeichert und in geeigneter Weise mit der Datenblock-Version, die bei der nächsten Übertragung des Datenblocks im Empfänger eingeht, kombiniert. H-ARQ-Verfahren nutzen aus, dass auch fehlerhaft übertragene Datenblöcke noch zu einem Informationsgewinn bei der Decodierung beitragen können.

Es ist bei H-ARQ-Verfahren bereits bekannt, eine wiederholte Übertragung eines Datenblocks störungssicherer zu gestalten als die Erstübertragung. Dies wird dadurch erreicht, dass bei der wiederholten Übertragung eines Datenblocks mehr bzw. eine andere Art von Redundanz hinzugefügt wird als bei der Erstübertragung dieses Datenblocks. Das Ziel ist, die wiederholte Übertragung so auszuführen, dass in Kombination mit vorher übertragenen Datenblock-Versionen eine Dekodierung möglich ist. Diese Maßnahme wird als IR (Incremental Redundancy) bezeichnet. In der Praxis werden bei der wiederholten Übertragung eines Datenblocks ein anderes Modulations- bzw. Kanalcodierungsschema verwendet und/oder ein anderes Punktierungsmuster als bei der Erstübertragung des Datenblocks eingesetzt.

Ein Nachteil von H-ARQ-Verfahren besteht darin, dass fehlerhafte Datenblock-Versionen solange im Empfänger zwischengespeichert werden müssen, bis die Decodierung des den fehlerhaften Datenblock-Versionen sendeseitig zugrunde liegenden Datenblocks gelingt. Hierfür muss Speicherplatz im Empfänger aufgewandt werden.

In dem Artikel "Datenbeschleuniger für Mobilfunk-Netze", von R. Zarits, Funkschau Nr. 46, 10/2001, Seiten 46 bis 48, ist der Einsatz von IR in Kombination mit dem EGPRS (Enhanced General Packet Radio Services) Standard beschrieben. Der EGPRS Standard basiert auf EDGE (Enhanced Data Rates for GSM Evolution) - einer Weiterentwicklung des GSM-(Global System for Mobile Communication-)Standards - und GPRS (General Packet Radio Services), der paketorientierten Übertragung von Nutzdaten bei GSM. Bei EGPRS werden neun verschiedene Modulations- und Kanalcodierschemata (bezeichnet als MCS-1 bis MCS-9) und drei bzw. zwei Punktierungsmuster (bezeichnet als P1 bis P3) eingesetzt. Punktierungsmuster z.B. für MCS-9 (P1, P2, P3) reduzieren die Datenrate um den Faktor 3, d.h. im zeitlichen Mittel bleibt von drei Bits vor der Punktierung nur ein Bit nach der Punktierung übrig. Die Modulations- und Codierschemata MCS-1 bis MCS-9 sowie die Punktierung sind in dem Standard 3GPP TS 43.064 V4.1.0 (2001-04) in dem Kapitel 6.5.5 beschrieben.

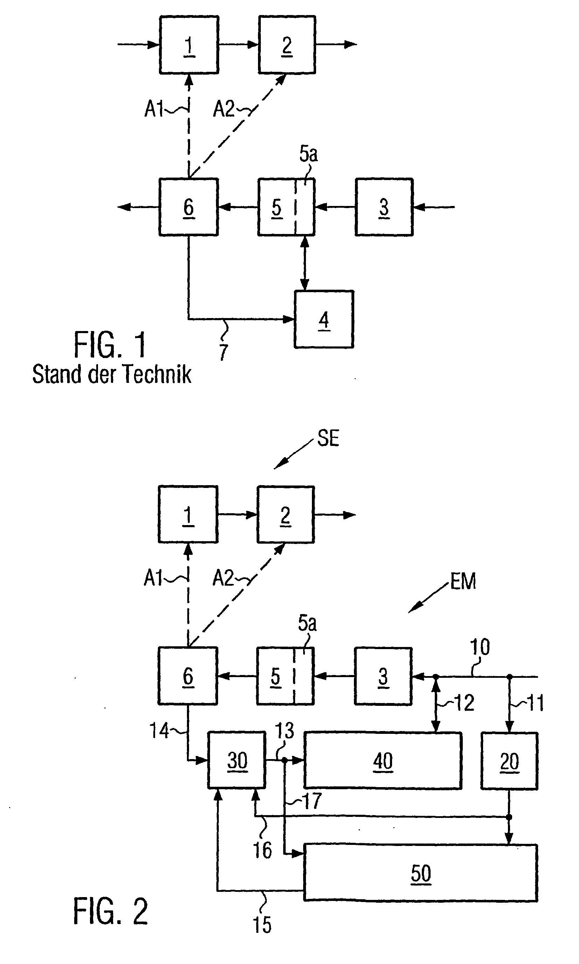

Für EGPRS ist bei ARQ bereits die folgende im Zusammenhang mit Fig. 1 erläuterte Vorgehensweise vorgeschlagen worden: Von einem Sender ist in Fig. 1 lediglich der Kanalcodierer 1 und ein Punktierer 2 dargestellt. Auf Seiten des Empfängers zeigt Fig. 1 einen Depunktierer 3, einen IR-Speicher 4, einen Kanaldecodierer 5 mit vorgeschaltetem Kombinierer 5a und einen Fehlerdetektor 6. Bei der Übertragung eines Datenblocks wird dieser von dem Kanalcodierer 1 kanalcodiert und in dem Punktierer 2 punktiert. Nach einer Modulation (nicht dargestellt) wird der kanalcodierte, punktierte Datenblock über den Übertragungskanal (Luftschnittstelle) übertragen und von dem Empfänger empfangen. Die am Empfänger eintreffende Datenblock-Version wird von dem Depunktierer 3 depunktiert (d.h. die sendeseitig bei der Punktierung entfernten Bits werden als Nullen wieder hinzugefügt) und von dem Kanaldecodierer 5 decodiert. Falls die Kanaldecodierung fehlschlägt, wird dies von dem Fehlerdetektor 6 erkannt. Die depunktierte Datenblock-Version wird dann in dem IR-Speicher 4 zwischengespeichert (die entsprechende Anweisung erfolgt über die Steuerverbindung 7), und der Datenblock wird gemäß üblichem ARQ-Vorgehen nochmals übertragen. Wie durch die Pfeile A1, A2 angedeutet, können bei der Zweitübertragung des Datenblockes ein anderes Modulations- und Codierschema und ein anderes Punktierungsmuster als bei der Erstübertragung eingesetzt werden. Die daraufhin empfangene zweite Datenblock-Version wird im Depunktierer 3 depunktiert, im Kombinierer 5a mit der depunktierten ersten Datenblock-Version kombiniert und die depunktierte und kombinierte Datenblock-Version wird abermals von dem Kanaldecodierer 5 decodiert. Schlägt die Decodierung nochmals fehl, wird in dem IR-Speicher 4 die depunktierte und kombinierte Datenblock-Version durch Überschreiben der dort gespeicherten Datenblock-Erstversion abgespeichert und eine dritte Übertragung des Datenblockes am Sender angefordert. Das Verfahren wird fortgesetzt, bis der Datenblock erfolgreich decodiert ist.

Das anhand Fig. 1 beschriebene Verfahren der Abspeicherung von depunktierten Datenblock-Versionen weist den Vorteil auf, dass eine relativ einfache Speicherverwaltung ermöglicht wird, da stets nur eine einzige depunktierte Datenblock-Version (entweder die erste empfangene depunktierte Datenblock-Version oder die depunktierte und kombinierte Datenblock-Version) zu jedem nicht-decodierbaren Datenblock abgespeichert werden muss. Nachteilig ist jedoch, dass dieses Verfahren nicht immer optimale Decodier-Ergebnisse liefert und ferner - insbesondere bei einer starken Punktierung - einen relativ großen Speicherplatzbedarf aufweist. Insbesondere werden Versionen kombiniert, die extrem unterschiedliche Ausbreitungsbedingungen erfahren haben können, so dass in Grenzfällen die kombinierte Version schlechter zu dekodieren ist als die Version, die auf die Kombination mit extrem schlecht übertragenen Versionen verzichtet. Zusätzlich muss durch die Kombination arithmetisch bedingt (bei einer Addition von Zahlen vergrößert sich die Wortbreite der binären Darstellung) eine größere Wortbreite der abzuspeichernden Blöcke zur Verfügung gestellt werden.

In der den nächstliegenden Stand der Technik repräsentierenden Druckschrift WO 01/43331 A1 wird ein ARQ-Verfahren beschrieben, bei welchem zu übermittelnde Daten in Datenblöcke unterteilt, codiert und nach ihrer Übertragung empfängerseitig decodiert werden. Fehlgeschlagene Übermittlungsversuche werden beim Decodieren erkannt. In die gesendeten Datenblock-Versionen wird eine Information (RSM) eingetragen, welche eine wiederholte Übermittlung der gesendeten Datenblock-Versionen kennzeichnet.

Der Erfindung liegt die Aufgabe zugrunde, ein Verfahren zur Verwaltung von bei wiederholten Aussendungen eines zu decodierenden Datenblockes erhaltenen Datenblock-Versionen in einem Empfänger zu schaffen, welches eine leistungsstarke Decodierung bei geringem Speicherplatzbedarf ermöglicht. Insbesondere soll das Verfahren bei schlechten oder stark schwankenden Übertragungsbedingungen mit Vorteil einsetzbar sein. Ferner liegt der Erfindung die Aufgabe zugrunde, eine Vorrichtung mit den genannten Vorzügen zu schaffen.

Die Erfindung wird durch die Merkmale der Ansprüche 1 und 15 gelöst.

Bei dem erfindungsgemäßen Verfahren zur Verwaltung von bei wiederholten Aussendungen eines zu decodierenden Datenblocks erhaltenen Datenblock-Versionen in einem Empfänger, wobei der auszusendende Datenblock im Sender einer Kanalcodierung und einer Punktierung unterzogen wird, ist ein Speicherbereich zum Ablegen von empfangenen Datenblock-Versionen in punktierter Form vorgesehen. Wird eine neue Datenblock-Version eines Datenblocks empfangen, dessen Decodierung im Empfänger bislang fehlgeschlagen ist und schlägt auch die Decodierung nach Kombination mit der neu empfangenen Datenblock-Version fehl, ist zu entscheiden, ob diese Datenblock-Version als punktierte Datenblock-Version in dem Speicherbereich abgespeichert wird oder nicht.

Das erfindungsgemäße Verfahren erfolgt nach den folgenden Entscheidungsschritten: Wenn freier Speicherplatz in dem Speicherbereich verfügbar ist, wird eine empfangene Datenblock-Version dort abgespeichert. Andernfalls wird entschieden, ob die empfangene Datenblock-Version durch Überschreiben einer Datenblock-Version desselben Datenblockes abgespeichert werden kann. Sofern dies nicht möglich ist, wird entschieden, ob die empfangene Datenblock-Version durch Überschreiben einer Datenblock-Version eines anderen Datenblockes abgespeichert werden kann. Wenn auch dies nicht möglich ist, wird die empfangene Datenblock-Version verworfen. Es wird darauf hingewiesen, dass bei dieser Verfahrensdurchführung auch Datenblock-Versionen überschrieben werden können, die nicht auf den Datenblock der aktuell empfangenen Datenblock-Version zurückgehen.

Durch das Abspeichern von punktierten Datenblock-Versionen statt depunktierten Datenblock-Versionen kann eine Verkleinerung des für IR benötigten Speicherbereichs erreicht werden, und zwar deshalb, weil die Größe einer punktierten Datenblock-Version beträchtlich kleiner sein kann als die Größe der depunktierten Datenblock-Version. Z.B. entspricht bei EGPRS im Fall von MCS-9 die Größe eines depunktierten Datenblocks der Größe von drei punktierten Datenblöcken. Insofern wird bei dem erfindungsgemäßen Verfahren nach dem ersten fehlgeschlagenen Decodierversuch nur ein Drittel der Speichergröße benötigt, die beim herkömmlichen Verfahren für die Abspeicherung der depunktierten Datenblock-Version aufgewandt werden muss. Für den Fall, dass zwei Versionen des zu übertragenden Datenblocks ausreichen, um eine erfolgreiche Decodierung durchzuführen, wird immer noch 33 % weniger Speicherfläche benötigt als beim herkömmlichen Verfahren. Da in Fällen mit moderaten Übertragungsbedingungen in der Regel ein bis zwei zwischengespeicherte Datenblock-Versionen (bezüglich desselben zu übertragenden Datenblocks) ausreichen, um eine den Anforderungen gemäße Bitfehlerrate nach der Decodierung zu gewährleisten, können gegenüber dem herkömmlichen Verfahren mit der Abspeicherung der depunktierten und (gegebenenfalls) kombinierten Datenblock-Version im Durchschnitt 1/3 bis 2/3 der Speicherfläche gespart werden.

Ein weiterer Vorteil des erfindungsgemäßen Verfahrens besteht darin, dass aufgrund der Entscheidung, ob eine Datenblock-Version zur Abspeicherung in dem Speicherbereich und damit für die spätere Kombination zugelassen wird oder nicht, Datenblock-Versionen mit besonders schlechten Übertragungseigenschaften von der Weiterverarbeitung ausgeschlossen werden können. Es kann somit gewährleistet werden, dass lediglich Datenblock-Versionen zur Kombination zugelassen werden, die einen positiven Beitrag zur Performance bei der Kanaldecodierung leisten. Dadurch wird erreicht, dass Datenblock-Versionen, die aufgrund ihrer schlechten Übertragungscharakteristik bei einer Kombination mit den zuvor empfangenen Datenblock-Versionen die Decodierleistung beeinträchtigen würden - anders als beim Stand der Technik, wo bei wiederholten Übertragungen jede einlaufende Datenblock-Version durch Kombination mit der zu diesem Zeitpunkt vorliegenden depunktierten (und gegebenenfalls auch bereits kombinierten) Datenblock-Version berücksichtig wird - beim erfindungsgemäßen Verfahren unberücksichtigt bleiben können.

Das erfindungsgemäße Verfahren weist allerdings auch Nachteile gegenüber dem Stand der Technik auf: Da punktierte Datenblock-Versionen zwischengespeichert werden, müssen vor jeder Kombination die zwischengespeicherten Datenblock-Versionen zunächst noch depunktiert werden. Ferner ist bei dem erfindungsgemäßen Verfahren gegebenenfalls eine aufwändigere Speicherverwaltung erforderlich, um auszuschließen, dass einlaufende Datenblock-Versionen mit schlechter Qualität den Speicherbereich zum Überlaufen bringen. In vielen Fällen überwiegen die beschriebenen Vorzüge (geringerer Speicherplatzbedarf und höhere Decodierleistung) jedoch diese Nachteile.

Eine besonders bevorzugte Ausführungsvariante der Erfindung kennzeichnet sich dadurch, dass in dem Speicherbereich abgelegte Datenblock-Versionen zu demselben Datenblock mit einem unterschiedlichen Kanalcode kanalcodiert und/oder einem unterschiedlichen Punktierungsmuster punktiert sein können.

Durch diese bei IR verwendete Maßnahme wird erreicht, dass die auf ein und denselben Datenblock zurückgehenden empfangenen Datenblock-Versionen eine unterschiedliche Menge an Redundanz und/oder (durch unterschiedliche Punktierung) eine unterschiedliche Darstellung der enthaltenen Informationen umfassen.

Eine besonders bevorzugte Ausführungsvariante des erfindungsgemäßen Verfahrens kennzeichnet sich dadurch, dass zu jeder in dem Speicherbereich abgelegten punktierten Datenblock-Version Verwaltungsinformationen im Empfänger geführt werden, welche eine Information über die Qualität der Datenblock-Version umfassen. Anhand dieser Qualitätsangabe ist es möglich, die Qualität einer einlaufenden Datenblock-Version mit der oder den Qualitäten der bereits abgespeicherten Datenblock-Version(en) zu vergleichen und auf der Basis dieses Vergleichs zu entscheiden, ob die aktuell empfangene Datenblock-Version abgespeichert oder verworfen werden soll.

Zu diesem Zweck umfasst die Verwaltungsinformation in vorteilhafter Weise ferner eine Information zur Referenzierung von weiteren gespeicherten Datenblock-Versionen zu demselben Datenblock. Dies ermöglicht eine Zuordnung der Qualitätseinträge der gespeicherten Datenblock-Versionen zu den einzelnen Datenblöcken.

Weitere Maßnahmen, die eine detailliertere Verwaltung von gespeicherten Datenblock-Versionen ermöglichen und die Parametermenge, auf deren Basis die Entscheidung für das Abspeichern bzw. Nichtabspeichern einer Datenblock-Version in dem Speicherbereich getroffen wird, vergrößern, bestehen darin, dass die Verwaltungsinformationen Informationen umfassen, welche den verwendeten Kanalcode und/oder das verwendete Punktierungsmuster der in dem Speicherbereich abgelegten Datenblock-Versionen angeben.

Vorzugsweise wird eine gespeicherte Datenblock-Version durch eine aktuell empfangene Datenblock-Version, die demselben. Datenblock wie die gespeicherte Datenblock-Version zugeordnet ist, nur dann überschrieben, wenn ein Vergleich der Qualität der aktuell empfangenen Datenblock-Version mit der Qualität der gespeicherten Datenblock-Version ergibt, dass die Qualität der aktuell empfangenen Datenblock-Version um einen vorgegebenen Differenzbetrag besser als die Qualität der gespeicherten Datenblock-Version ist. Dadurch wird erreicht, dass ein Überschreiben von Datenblock-Versionen nur durch qualitativ bessere Datenblock-Versionen möglich ist.

Mit besonderem Vorteil wird eine Differenzierung dahingehend vorgenommen, ob die zu überschreibende Datenblock-Version nach demselben Punktierungsmuster punktiert ist wie die aktuell empfangene Datenblock-Version oder nicht. Infolgedessen kennzeichnet sich eine vorteilhafte Maßnahme dadurch, dass der Differenzbetrag für den Fall, dass die empfangene Datenblock-Version und die gespeicherte Datenblock-Version nach demselben Punktierungsmuster punktiert sind, einen ersten vorgegebenen Differenzwert annimmt, dass der Differenzbetrag für den Fall, dass die empfangene Datenblock-Version und die gespeicherte Datenblock-Version nach verschiedenen Punktierungsmustern punktiert sind, einen zweiten vorgegebenen Differenzwert annimmt, und dass der zweite vorgegebene Differenzwert größer als der erste vorgegebene Differenzwert ist. Auf diese Weise wird berücksichtigt, dass der Informationsgewinn bei der Kombination von Datenblock-Versionen unterschiedlicher Punktierungsmuster um ein Vielfaches höher ist als der Informationsgewinn bei der Kombination von Datenblock-Versionen gleicher Punktierungsmuster. Der erste und der zweite vorgegebene Differenzwert können ferner von den verwendeten Codierschemata und/oder Punktierungsmustern abhängig sein.

Vorzugsweise kann eine gespeicherte Datenblock-Version eines ersten Datenblockes durch eine aktuell empfangene, einem anderen, zweiten Datenblock zugeordnete Datenblock-Version nur dann überschrieben werden, wenn für den ersten Datenblock mehr Datenblock-Versionen gespeichert sind als für den zweiten Datenblock, für den ersten Datenblock mehrere Datenblock-Versionen ein und desselben Punktierungsmusters $P_x$ vorliegen und die Qualität der aktuell empfangenen Datenblock-Version um einen vorgegebenen Differenzbetrag eines dritten Differenzwertes besser ist als die Qualität der gespeicherten Datenblock-Version. Durch diese Vorgehensweise wird sichergestellt, dass Datenblock-Versionen zu anderen Datenblöcken nur dann überschrieben werden, wenn dadurch kein gravierender Informationsverlust für die Decodierung des anderen Datenblockes bewirkt wird.

Die erfindungsgemäße Vorrichtung zur Verwaltung von bei wiederholten Aussendungen eines zu decodierenden Datenblocks erhaltenen Datenblock-Versionen in einem Empfänger umfasst einen Speicherbereich zum Ablegen von empfangenen Datenblock-Versionen in punktierter Form und eine Entscheidungslogik zum Entscheiden, ob eine empfangene Datenblock-Version zu einem Datenblock, dessen Decodierung im Empfänger bislang fehlgeschlagen ist und auch unter Berücksichtigung der aktuell empfangenen Datenblock-Version nicht gelingt, als punktierte Datenblock-Version in dem Speicherbereich abgespeichert wird oder nicht.

Vorzugsweise umfasst die Vorrichtung eine dem Speicherbereich zugeordnete Verwaltungsinformations-Tabelle, in welcher zu jeder gespeicherten punktierten Datenblock-Version Verwaltungsinformationen eingetragen sind, wobei die Tabelle einen Eintrag für eine Information über die Qualität der Datenblock-Version umfasst, und die Entscheidungslogik auf Einträge der Verwaltungsinformations-Tabelle zugreift und ihre Entscheidung in Abhängigkeit von den erhaltenen Verwaltungsinformationen trifft. Durch die Verwaltung des Speicherbereichs mit Hilfe der Entscheidungslogik und der Verwaltungsinformations-Tabelle können gezielt aktuell empfangene Datenblock-Versionen verworfen bzw. zur Kombination zugelassen werden sowie bereits abgespeicherte Datenblock-Versionen überschrieben werden. Dadurch kann zum einen der Speicherplatzbedarf minimiert und zum anderen die Decodierleistung verbessert werden.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Zeichnung dargestellt; in dieser zeigt:

Fig. 1 eine schematische Darstellung einer Sende- und Empfängerstruktur für H-ARQ mit einem IR-Speicher gemäß dem Stand der Technik;

Fig. 2 eine schematische Darstellung einer Sender- und Empfängerstruktur für H-ARQ mit einer erfindungsgemäßen Vorrichtung zur Verwaltung eines IR-Speichers;

Fig. 3 den Aufbau einer Verwaltungsinformations-Tabelle;

Fig. 4 ein Ablaufdiagramm zur Erläuterung des erfindungsgemäßen Verfahrens;

Fig. 5 ein Ablaufdiagramm zur Erläuterung des Überschreibens einer gespeicherten Datenblock-Version durch eine empfangene Datenblock-Version desselben Datenblocks; und

Fig. 6 ein Ablaufdiagramm zur Erläuterung des Überschreibens einer gespeicherten Datenblock-Version durch eine empfangene Datenblock-Version eines anderen Datenblocks.

Im Folgenden wird mit dem Begriff "Datenblock" der senderseitige RLC-Datenblock (RLC: Radio Link Control) bezeichnet, d.h. ein Datenblock, der in der Verbindungsschicht (RLC layer) des OSI-Referenzmodells definiert ist. Ein RLC-Datenblock ist unbeeinflusst von den in der darunterliegenden MAC Schicht (MAC: Medium Access Control) vorgenommenen Verarbeitungsschritten wie Kanalcodierung, Punktierung und Modulation.

In Fig. 2 wird am Beispiel von EGPRS die erfindungsgemäße sende- und empfangsseitige Datenverarbeitung bei einem H-ARQ-Verfahren im Fall von IR erläutert. Dieselben oder vergleichbare Funktionselemente wie in der Fig. 1 sind mit denselben Bezugszeichen bezeichnet. Die Datenverarbeitung in dem Sender SE erfolgt, wie in Fig. 1 bereits erläutert, mittels des Kanalcodierers 1, des Punktierers 2 und eines nicht dargestellten Modulators. Die neun Modulations- und Codierschemata MCS-1, MCS-2, ..., MCS-9 erreichen Datenraten von 8,8 kBit/s bis 59,2 kBit/s pro Zeitschlitz, wobei die Schemata MCS-5 bis MCS-9 ein 8-PSK (Phase Shift Keying) Verfahren verwenden, während die Schemata MCS-1 bis MCS-4 eine 8-PSK als auch eine GMSK (Gaussian Minimum Shift Keying) Modulation einsetzen.

Auf Seiten des Empfängers EM werden die über den Übertragungskanal übertragenen Datenblock-Versionen nach einer Digitalisierung und Entzerrung (nicht dargestellt) über die Datenverbindung 10 dem Depunktierer 3 zugeleitet. Gleichzeitig stehen die empfangenen Datenblock-Versionen über eine Datenverbindung 12 einem IR-Speicher 40 zur Verfügung und können ggf. über eine Datenverbindung 11 einer Einheit 20 zum Schätzen der Qualität einer Datenblock-Version zugeführt werden. Der IR-Speicher 40 ist in Art einer FIFO-(First In First Out-)Struktur ausgelegt.

Der Fehlerdetektor 6 steht über eine Datenverbindung 14 mit dem Eingang einer Logikeinheit 30 in Verbindung. Die Logikeinheit 30 ist ferner über eine Datenverbindung 15 mit einem Verwaltungsinformations-Tabellenspeicher 50 verbunden und steht über eine Datenverbindung 16 mit dem Ausgang der Einheit 20 zum Schätzen der Qualität einer Datenblock-Version in Verbindung. Ein Ausgang der Logikeinheit 30 ist über eine Datenverbindung 13 mit einem Schreib-/ Leseeingang sowie mit dem Adresseneingang des IR-Speichers 40 verbunden. Über die Datenverbindung 17 werden diese Informationen auch dem Verwaltungsinformations-Tabellenspeicher 50 mitgeteilt.

Es wird darauf hingewiesen, dass der in Fig. 2 dargestellte Aufbau konzeptioneller Natur ist und Hardware-mäßig in gänzlich anderer Form als in Fig. 2 dargestellt realisiert sein kann. Sämtliche im Folgenden zu beschreibenden Prozess-Schritte können z.B. in einem Prozessor auf der Basis eines geeigneten Datenverarbeitungsprogramms durchgeführt werden, oder es ist auch möglich, einen Teil dieser Schritte, z.B. die Depunktierung in dem Depunktierer 3 und/ oder die Decodierung in dem Kanaldecodierer 5, zumindest teilweise in Hardware (d.h. mit festverdrahteten Schaltungen) zu realisieren. Ferner wird darauf hingewiesen, dass Pufferspeicher für die temporäre Speicherung von Datenblock-Versionen in Fig. 2 nicht dargestellt sind.

Die Funktionalität des in Fig. 2 gezeigten Schaltungskonzeptes ist wie folgt:

Betrachtet wird die Übertragung eines bestimmten RLC-Datenblockes. Beim ersten Übertragungsversuch wird dieser Datenblock gemäß einem bestimmten Modulations- und Kanalcodierschema MCS-1, ..., MCS-9 kanalcodiert, mit einem bestimmten Punktierungsmuster P1, P2, P3 punktiert, moduliert und zu dem Empfänger EM übertragen. Die dort eintreffende Datenblock-Version wird in nicht dargestellter Weise zwischengespeichert, in dem Depunktierer 3 depunktiert und in dem Kanaldecodierer 5 decodiert. Stellt der Fehlerdetektor 6 anschließend fest, dass die erhaltenen Daten ausreichend fehlerfrei sind, ist der Vorgang beendet und der ausgesendete RLC-Datenblock im Empfänger erfolgreich decodiert. Andernfalls wird gemäß H-ARQ die wiederholte Übertragung des Datenblocks angefordert, wobei senderseitig, wie bereits erwähnt, ein anderes Codierschema MCS-1, ..., MCS-9 und/oder ein anderes Punktierungsmuster P1, P2, P3 eingesetzt werden kann. Außerdem wird überprüft, ob die in einem Pufferspeicher (nicht dargestellt) aufbewahrte Erstversion des Datenblockes in dem IR-Speicher 40 zwischengespeichert werden soll. Zu diesem Zweck ermittelt die Einheit 20 einen Qualitätswert, welcher für die Qualität dieser Datenblock-Version bzw. für den Übertra-gungskanal aussagekräftig ist. Der Qualitätswert kann beispielsweise aus den Soft-Output-Werten des im Signalweg vorgeschalteten Entzerrers berechnet werden. Der Einheit 20 werden dann die entzerrten Datenbits sowie die von dem Entzerrer berechneten Soft-Output-Werte zu diesen Datenbits mitgeteilt. Im EGPRS Standard besteht ein Datenblock aus vier einzelnen Bursts. Eine Möglichkeit zur Ermittlung des Qualitätswertes besteht darin, dass die Einheit 20 für jeden Burst die Verteilung der Soft-Output-Werte anhand eines z.B. 16-wertigen Histogramms ermittelt. Als Qualitätsmaß für jede empfangene Datenblock-Version werden die Histogramme der vier zusammengehörigen Bursts addiert und mit einem fest vorgegebenen 16-wertigen Referenzwert gefaltet. Da Soft-Output-Werte ein Maß für die Konfidenz eines entschiedenen Datenbits (Wert 0 oder 1) darstellen, spiegelt der auf diese Weise berechnete Qualitätswert die jeweiligen Übertragungscharakteristiken des Kanals wieder. Es sind jedoch auch andere Möglichkeiten zur Berechnung des Qualitätswertes für eine Datenblock-Version durch die Einheit 20 denkbar.

Wenn der Logikeinheit 30 über die Datenverbindung 14 das Scheitern der Decodierung der ersten Datenblock-Version mitgeteilt wird, hat diese also zu entscheiden, ob die zwischengespeicherte erste Datenblock-Version in dem IR-Speicher 40 abgelegt werden soll oder nicht. Zu diesem Zweck greift die Logikeinheit 30 über die Datenverbindung 16 auf den in der Einheit 20 berechneten Qualitätswert sowie über die Datenverbindung 15 auf die in dem Verwaltungsinformations-Tabellenspeicher 50 abgelegten Verwaltungsinformationen bezüglich des IR-Speichers 40 zurück. Auf der Basis dieser Informationen trifft die Logikeinheit 30 ihre Entscheidung und teilt diese über die Datenverbindungen 13 bzw. 17 dem IR-Speicher 40 bzw. dem Verwaltungsinformations-Tabellenspeicher 50 mit. In den meisten Fällen wird die nicht-decodierbare Datenblock-Erstversion in dem IR-Speicher 40 abgespeichert werden, wobei der Schreibzugriff über die Datenverbindung 12 veranschaulicht ist.

Es kann auch vorgesehen sein, dass eine empfangene Datenblock-Erstversion stets in dem IR-Speicher 40 abgelegt wird.

Bei Eintreffen der zweiten Datenblock-Version wird die erste, gespeicherte Datenblock-Version aus dem IR-Speicher 40 ausgelesen und von dem Depunktierer 3 depunktiert. Die zweite Datenblock-Version wird ebenfalls von dem Depunktierer 3 depunktiert. Die beiden depunktierten Datenblock-Versionen werden anschließend in dem Kombinierer 5a kombiniert. Hierfür können unterschiedliche Kombinationsmethoden eingesetzt werden, z.B. eine in Abhängigkeit von den Soft-Bit-Werten gewichtete Addition der beiden depunktierten Datenwörter. Anschließend erfolgt die Kanaldecodierung der kombinierten Datenblock-Version in dem Kanaldecodierer 5 und die Beurteilung des Decodierergebnisses mittels des Fehlerdetektors 6.

Sofern auch der zweite Decodierversuch nicht erfolgreich war, wird eine weitere Übertragung des RLC-Datenblocks angewiesen und gleichzeitig die in dem IR-Speicher 40 des Empfängers verwaltete Redundanz-Information aktualisiert. Dabei entscheidet die Logikeinheit 30 in der bereits beschriebenen Weise, d.h. unter Berücksichtigung des Qualitätswertes der zweiten Datenblock-Version und der Verwaltungsinformationen, ob die zweite Datenblock-Version verworfen oder in dem IR-Speicher 40 abgespeichert wird.

Es wird darauf hingewiesen, dass die bei den Übertragungen erhaltenen Datenblock-Versionen stets getrennt und punktiert in dem IR-Speicher 40 abgelegt werden.

Der beschriebene Vorgang wird solange wiederholt, bis der Datenblock ordnungsgemäß decodiert ist. Selbstverständlich werden zwischen den wiederholten Aussendungen des betrachteten RLC-Datenblockes andere Datenblöcke übertragen, so dass in dem IR-Speicher 40 Datenblock-Versionen zu unterschiedlichen Datenblöcken zwischengespeichert werden.

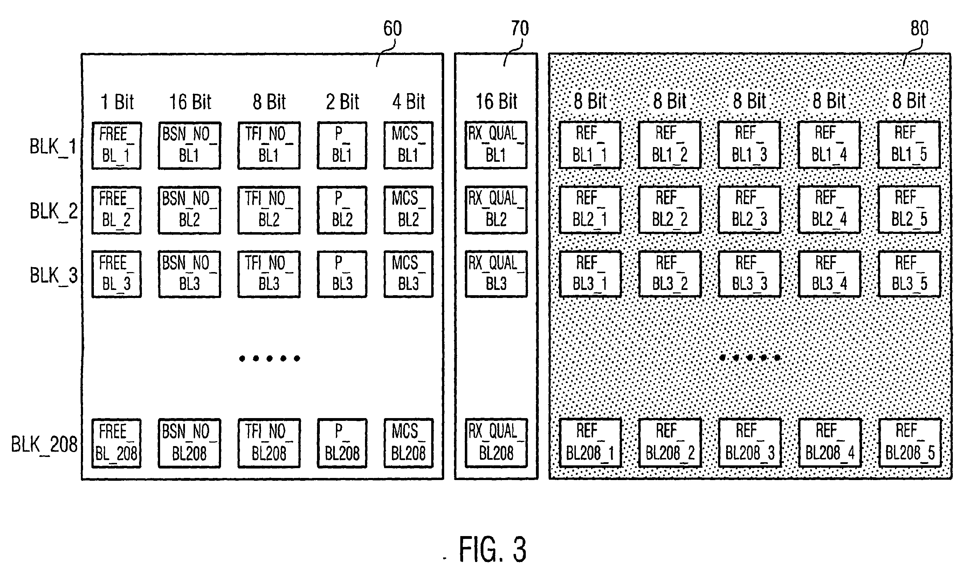

Fig. 3 zeigt in beispielhafter Weise eine Verwaltungsinformations-Tabelle, wie sie in dem Verwaltungsinformations-Tabellenspeicher 50 geführt wird. Die Verwaltungsinformations-Tabelle untergliedert sich in drei einzelne Tabellen, nämlich die Datenblock-Tabelle 60, die Qualitätswerte-Tabelle 70 und die Referenz-Tabelle 80.

Die Datenblock-Tabelle 60 gibt den Dateninhalt des IR-Speichers 40 wieder. D.h., für jede in dem IR-Speicher 40 abgespeicherte Datenblock-Version wird ein Eintrag in der Datenblock-Tabelle 60 geführt. In dem hier dargestellten Beispiel können 208 Datenblock-Versionen auf den Positionen BLK_1, BLK_2, ..., BLK_208, abgespeichert werden.

Eine erste, 1-Bit breite Spalte der Datenblock-Tabelle 60 enthält Flags FREE_BL_1, ..., FREE_BL_208, welche angeben, ob die zugehörige Speicherposition belegt oder frei ist.

Jeder einlaufenden Datenblock-Version wird eine den zugehörigen RLC-Datenblock kennzeichnende Nummer ("Blocknummer") vergeben, die in der zweiten Spalte als sogenannte BSN-Nummer (Block Sequence Number) BSN_NO_BL1, BSN_NO_BL2, ..., BSN_NO_BL208 angegeben ist.

Die in der dritten Spalte eingetragenen TFI-Nummern (TFI: Temporary Flow Identity) TFI_NO_BL1, TFI_NO_BL2, ..., TFI_NO_BL208, unterscheiden die von der Basisstation definierten "Block Flow"-Prozeduren, denen der empfangene Datenblock angehört. Durch die BSN-Nummer und die TFI-Nummer wird eine in dem IR-Speicher 40 abgelegte Datenblock-Version eindeutig gekennzeichnet.

In der vierten Spalte von links ist das für die jeweilige Datenblock-Version verwendete Punktierungsmuster P_BL1, P_BL2, ..., P_BL208 angegeben. Da nur drei Punktierungsmuster P1, P2, P3 vorhanden sind, genügt eine Codierung dieses Eintrages durch zwei Bits.

In der fünften Spalte sind die verwendeten Modulations- und Codierschemata MCS_BL1, MCS_BL2, ..., MCS_BL208, der einzelnen Datenblock-Versionen eingetragen. Die neun verschiedenen Schemata MCS-1 bis MCS-9 können mit einer Wortbreite von 4 Bit codiert werden.

Die Qualitätswerte-Tabelle 70 enthält die von der Einheit 20 berechneten Qualitätswerte für sämtliche gespeicherten Datenblock-Versionen, bezeichnet mit RX_QUAL_BL1, RX_QUAL_BL2, ..., RX_QUAL_BL208.

Die Einträge in der Referenz-Tabelle 80 geben die Speicherpositionen BLK_1, ..., BLK_208 von Datenblock-Versionen an, die dieselbe BSN-Nummer aufweisen. Mittels der Referenz-Tabelle 80 lassen sich somit diejenigen Datenblock-Versionen ermitteln, die (bei IR) mit unterschiedlichen MCS-Schemata und Punktierungsmustern übertragen wurden, aber ansonsten die gleiche Dateninformation tragen, d.h. Versionen ein und desselben RLC-Datenblocks sind. Beispielsweise bedeutet REF_BL7_1 = 57, REF_BL7_2 = 121, REF_BL7_3 = 191, REF_BL7_4 = 0, REF_BL7_5 = 0, dass an den Speicherpositionen BLK_57, BLK_121, BLK_191 Datenblock-Versionen mit derselben BSN-Nummer wie der Datenblock 7 gespeichert sind. Ein Eintrag des Wertes 0 bedeutet, dass keine Datenblock-Version referenziert wird.

Die Referenz-Tabelle 80 ermöglicht somit das Auffinden derjenigen Datenblock-Versionen, die bezüglich eines zu übertragenden Datenblocks bei vorangegangenen Fehlversuchen in dem IR-Speicher 40 abgelegt wurden. In dem hier dargestellten Beispiel können Datenblock-Versionen für fünf wiederholte Übertragungen eines Datenblock referenziert werden. Es ist jedoch auch möglich, die Anzahl der Datenblock-Versionen mit Hilfe des vorgestellten Verfahrens auf 2 zu begrenzen.

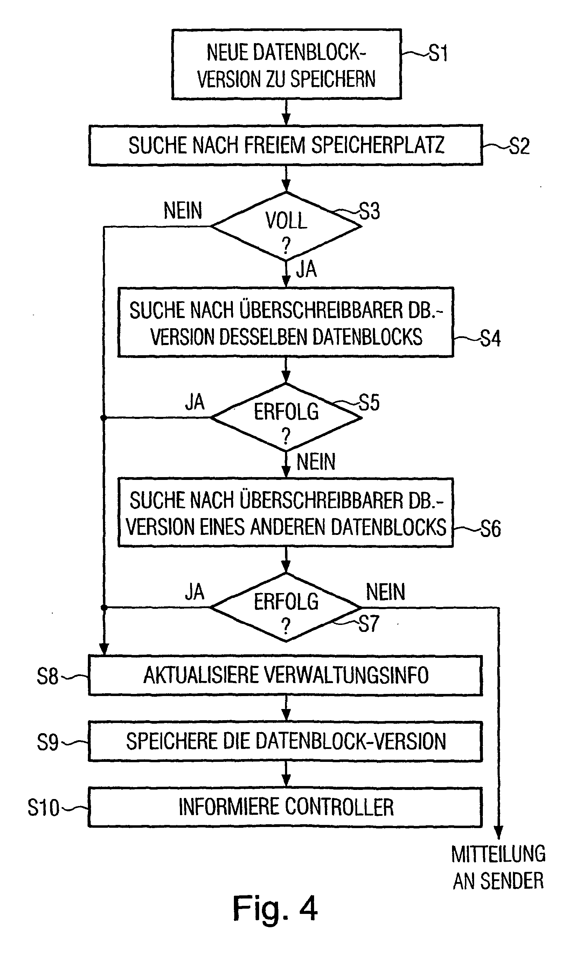

Fig. 4 zeigt die Schritte, die durchzuführen sind, wenn eine neue Datenblock-Version in dem IR-Speicher 40 gespeichert werden soll (Schritt S1).

Zunächst wird anhand der Verwaltungsinformation überprüft, ob ein freier Speicherplatz für die Abspeicherung der Datenblock-Version vorhanden ist. Hierfür werden die Flags FREE_BL_1, ..., FREE_BL_208 in der Datenblock-Tabelle 60 durchsucht (Schritt S2) und geprüft, ob der IR-Speicher 40 vollständig belegt ist (Schritt S3).

Sofern der IR-Speicher 40 nicht voll ist, geht der Prozess in den Schritt S8 über.

Andernfalls erfolgt eine Suche nach einer überschreibbaren Datenblock-Version desselben (RLC-)Datenblocks. Die Suche wird unter Zuhilfenahme der Referenz-Tabelle 80 durchgeführt und erstreckt sich über sämtliche gespeicherten Datenblock-Versionen mit derselben BSN-Nummer wie die aktuelle Datenblock-Version.

Falls die Suche erfolgreich ist, geht der Prozess gemäß Schritt S5 in Schritt S8 über. Andernfalls erfolgt eine Suche nach einer überschreibbaren Datenblock-Version eines anderen (RLC-)Datenblocks, siehe Schritt S6. Die Suche erstreckt sich über sämtliche gespeicherten Datenblock-Versionen, die gemäß der Referenz-Tabelle 80 einem anderen Datenblock zugeordnet sind als die aktuell empfangene Datenblock-Version.

Der Schritt S6 wird nur dann durchgeführt, wenn der Schritt S4 nicht erfolgreich war. Falls beide Schritte S4 und S6 ohne Erfolg bleiben, wird dem Sender SE eine Nachricht geschickt, dass der IR-Speicher 40 im Empfänger EM übergelaufen ist. In diesem Fall wird der Sendebetrieb verzögert.

Sofern der Schritt S6 erfolgreich ist, geht der Prozess in den Schritt S8 über. In dem Schritt S8 werden die Verwaltungsinformations-Tabellen 60, 70, 80 durch Setzen des Flags (falls IR-Speicher 40 nicht voll war) und Eintragen der neuen BSN-Nummer, der neuen TFI-Nummer, des RX_QUAL-Wertes für die Qualität der abzuspeichernden Datenblock-Version, des Punktierungsmusters P, des Modulations- und Codierschemas MCS und einer Referenzierung in der Referenz-Tabelle 80 aktualisiert.

Anschließend wird die neue Datenblock-Version in dem Schritt S9 im IR-Speicher 40 gespeichert. Im Schritt S10 wird einem den Gesamtablauf steuernden Controller eine Mitteilung über den durchgeführten Prozess und insbesondere das Ergebnis der Suchläufe S4 und S6 gemacht.

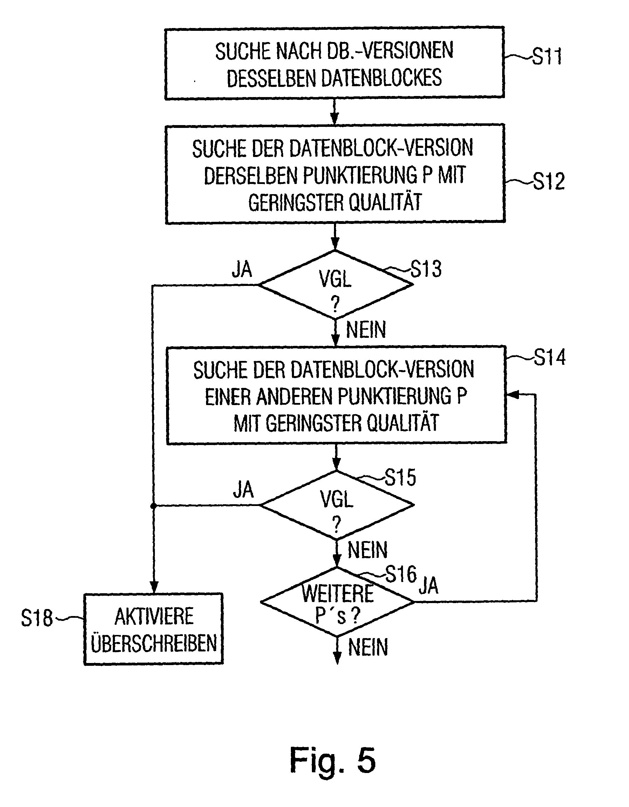

In Fig. 5 wird der in Schritt S4 durchgeführte Suchlauf nach überschreibbaren Datenblock-Versionen desselben Datenblockes näher erläutert.

In Schritt S11 wird eine Suche nach Datenblock-Versionen desselben Datenblockes durchgeführt. Die Suche erstreckt sich über gespeicherte Datenblock-Versionen mit derselben BSN-Nummer wie die abzuspeichernde Datenblock-Version. Sie erfolgt anhand der Einträge in der Tabelle 80.

In dem nächsten Schritt S12 wird unter diesen Datenblock-Versionen diejenige Datenblock-Version desselben Punktierungsmusters P ermittelt, die die geringste Qualtität aufweist. Die Ermittlung erfolgt anhand der entsprechenden Einträge in den Tabellen 60 und 70 der Verwaltungsinformation (siehe Fig. 3). Die gefundene Datenblock-Version wird mit BL_EMIN bezeichnet.

Im Schritt S13 wird die folgende Ungleichung überprüft:

$$RX\_QUAL(BL\_EMIN) + DIFF1 < RX\_QUAL(BL\_AKT)$$

Dabei bezeichnet RX_QUAL(BL_EMIN) den Qualitätswert der Datenblock-Version BL_EMIN, RX_QUAL(BL_AKT) bezeichnet den Qualitätswert der aktuellen Datenblock-Version BL_AKT und DIFF1 bezeichnet einen vorgebbaren Differenzbetrag, der auch den Wert 0 annehmen kann.

Sofern die Ungleichung erfüllt ist, wird in Schritt S18 ein Schreibzugriff auf den IR-Speicher 40 aktiviert und die Datenblock-Version BL_EMIN durch die aktuelle Datenblock-Version BL_AKT überschrieben.

Andernfalls geht der Prozess in den Schritt S14 über. Im Schritt S14 erfolgt eine Suche nach derjenigen Datenblock-Version eines anderen Punktierungsmusters P als die aktuelle Datenblock-Version BL_AKT, die den geringsten Qualitätswert aufweist.

Die gefundene Datenblock-Version wird mit BL_EMIN' bezeichnet. Im Schritt S15 wird durch Vergleich überprüft, ob die Ungleichung

$$RX\_QUAL(BL\_EMIN') + DIFF2 < RX\_QUAL(BL\_AKT)$$

erfüllt ist. Sofern dies der Fall ist, geht der Prozess in den Schritt S18 über. Andernfalls erfolgt im Schritt S16 anhand der Verwaltungsinformation eine Überprüfung, ob in dem IR-Speicher 40 mit nochmals anderen Punktierungsmustern P punktierte Datenblock-Versionen vorhanden sind. Ist dies der Fall werden die Schritte S14, S15 und S18 bzw. S16 wiederholt.

Die Werte DIFF1 und DIFF2 können von den Modulations- und Codierschemata MCS-1, ..., MCS-9 der zu vergleichenden Datenblock-Versionen BL_EMIN bzw. BL_EMIN' und BL_AKT abhängig sein. Aufgrund des Informationsgewinns bei der Kombination von Datenblock-Versionen unterschiedlicher Punktierungsschemata gilt DIFF2 > DIFF1.

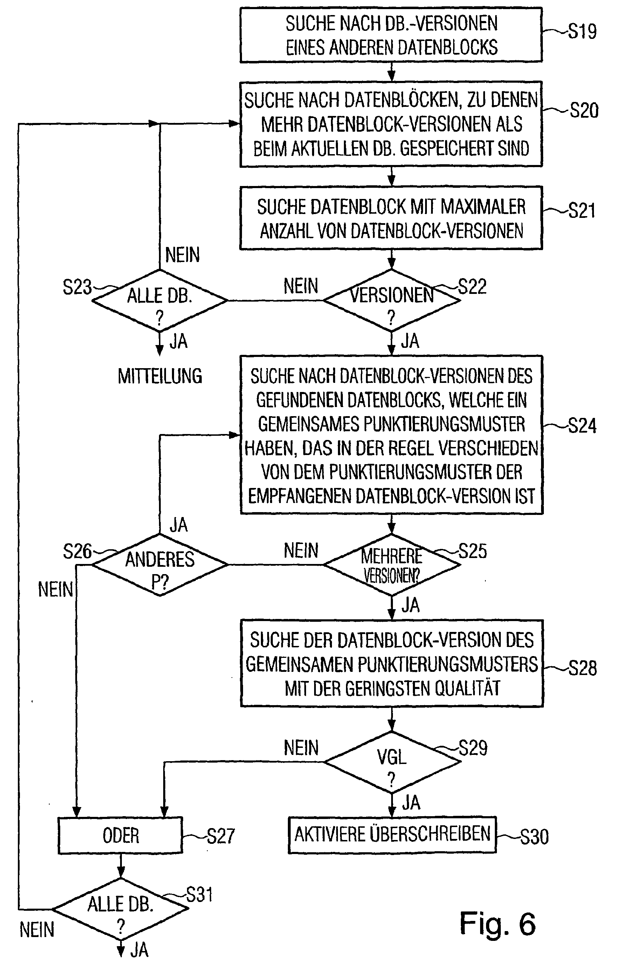

Fig. 6 zeigt die Vorgehensweise bei der in Schritt S6 durchzuführenden Suche nach überschreibbaren Datenblock-Versionen eines anderen Datenblockes (Schritt S19).

Im Schritt S20 werden anhand der Information in der Referenz-Tabelle 80 die Datenblöcke gesucht, für die jeweils mehr gespeicherte Datenblock-Versionen in dem IR-Speicher 40 vorliegen als für den Datenblock, auf welchen die aktuelle Datenblock-Version BL_AKT zurückgeht.

Anschließend wird unter den gefundenen Datenblöcken derjenige Datenblock mit der maximalen Anzahl von gespeicherten Datenblock-Versionen gesucht (Schritt S21).

In Schritt S22 wird überprüft, ob die Anzahl der Versionen des gefundenen Datenblockes größer als die Anzahl der Versionen des aktuellen Datenblockes ist.

Wenn dies nicht der Fall ist, geht der Prozess in den Schritt S23 über. Im Schritt S23 wird überprüft, ob sämtliche Datenblöcke, bezüglich denen eine Datenblock-Version in dem IR-Speicher 40 abgespeichert ist, überprüft wurden. Sofern dies nicht der Fall ist, wird der Schritt S20 nochmals durchgeführt. Andernfalls wird dem Sender SE die Mitteilung gemacht, das der IR-Speicher 40 überläuft, woraufhin der Sender SE die Übertragung von Datenblöcken verzögert.

Sofern der Schritt S22 erfolgreich war, wird im Schritt S24 eine Suche nach dem mehrmaligen Vorkommen eines gemeinsamen Punktierungsmusters innerhalb der gefundenen Datenblock-Versionen durchgeführt. Die Suche erstreckt sich über die in dem Schritt S21 gefundenen Datenblöcke (d.h. die zugehörigen BSN- und TFI-Nummern der Verwaltungsinformation). Es wird überprüft, ob es mehrere Datenblock-Versionen des gefundenen Datenblocks mit einem gemeinsamen Punktierungsmuster P1 oder P2 oder P3 innerhalb eines Modulations- und Codierschemas MCS-1, ..., MCS-9 gibt. Das gemeinsame Punktierungsmuster P1, P2, P3 hat nichts mit dem Punktierungsmuster der abzuspeichernden Datenblock-Version des anderen Datenblocks zu tun.

Im Schritt S25 wird überprüft, ob in dem Schritt S24 mehrere Datenblock-Versionen eines gemeinsamen Punktierungsmusters P gefunden wurden. Wenn dies nicht der Fall ist, wird im Schritt S26 überprüft, ob alle verfügbaren Punktierungsmuster überprüft wurden. Daraufhin wird getestet, ob mehrere Datenblock-Versionen des gefundenen Datenblocks eines anderen gemeinsamen Punktierungsmusters in dem IR-Speicher 40 verfügbar sind. Falls dies der Fall ist, geht der Prozess in den Schritt S24 zurück. Andernfalls geht der Prozess in den Schritt S27 über.

Sofern in dem Schritt S25 festgestellt wird, dass zu dem Datenblock mit der maximalen Anzahl von Datenblock-Versionen mehrere Datenblock-Versionen mit einem gemeinsamen Punktierungsmuster gespeichert sind, erfolgt in Schritt S28 eine Suche nach derjenigen Datenblock-Version des gemeinsamen Punktierungsmusters mit dem geringsten Qualitätswert.

In dem Schritt S29 wird überprüft, ob die Ungleichung

$$RX\_QUAL(BL\_EMIN") + DIFF3 < RX\_QUAL(BL\_AKT)$$

erfüllt ist. Dabei bezeichnet BL_EMIN" die in dem Schritt S28 gefundene Datenblock-Version, und DIFF3 bezeichnet einen vorgebbaren Differenzwert, der auch 0 sein kann.

Sofern die Ungleichung erfüllt ist, wird im Schritt S30 das Überschreiben der im Schritt S28 gefundenen Datenblock-Version aktiviert. Andernfalls geht der Prozess in den Schritt S27 über.

In dem Schritt S27 wird eine logische ODER-Verknüpfung vorgenommen, d.h. der Prozess gelangt entweder von Schritt S26 oder S29 zu Schritt S31. Im Schritt S31 wird überprüft, ob sämtliche Datenblöcke bei der in Schritt S20 erfolgten Suche erfasst wurden. Wenn dies nicht der Fall war, kehrt der Prozess in den Schritt S20 zurück. Andernfalls ergeht eine Mitteilung an den Sender SE, dass der IR-Speicher 40 überläuft und deshalb die Datenübertragung verzögert werden muss.

Die Größe des IR-Speichers 40 kann so bemessen sein, dass im zeitlichen Mittel für jeden Datenblock nicht mehr als z.B. zwei Datenblock-Versionen in dem IR-Speicher 40 gespeichert sind. Für EGPRS wird eine Speicherreduzierung im Vergleich zum Stand der Technik bei durchschnittlich nicht mehr als 3 gespeicherten Datenblock-Versionen pro Datenblock erreicht. In der Praxis ist eine Reduzierung des IR-Speichers 40 um einige 1.000 bis etwa 10.000 Datenworte der Wortbreite von 16 Bit möglich.

**Patentansprüche**

1. Verfahren zur Verwaltung von bei wiederholten Aussendungen eines zu decodierenden Datenblockes erhaltenen Datenblock-Versionen in einem Empfänger (EM), wobei der auszusendende Datenblock im Sender (SE) einer Kanalcodierung (1) und einer Punktierung (2) unterzogen wird, mit den Schritten:

   - Vorsehen eines Speicherbereichs (40) zum Ablegen von empfangenen Datenblock-Versionen in punktierter Form; und
   - Entscheiden (30), ob eine aktuell empfangene Datenblock-Version (BL_AKT) zu einem Datenblock, dessen Decodierung im Empfänger (EM) bislang fehlgeschlagen ist und auch unter Berücksichtigung der aktuell empfangenen Datenblock-Version (BL_AKT) nicht gelingt, als punktierte Datenblock-Version in dem Speicherbereich (40) abgespeichert wird oder nicht,

   **gekennzeichnet dadurch daß** das Entscheiden durch die folgenden Entscheidungsschritte geschieht:

   - Abspeichern der aktuell empfangenen Datenblock-Version (BL_AKT), wenn freier Speicherplatz verfügbar ist; andernfalls
   - Entscheiden, ob die aktuell empfangene Datenblock-Version (BL_AKT) durch Überschreiben einer Datenblock-Version desselben Datenblockes abgespeichert werden kann; sofern dies nicht möglich ist,
   - Entscheiden, ob die aktuell empfangene Datenblock-Version (BL_AKT) durch Überschreiben einer Datenblock-Version eines anderen Datenblockes abgespeichert werden kann; andernfalls
   - Verwerfen der aktuell empfangenen Datenblock-Version (BL_AKT).

2. Verfahren nach Anspruch 1,
   **dadurch gekennzeichnet,**
   **dass** in dem Speicherbereich (40) abgelegte Datenblock-Versionen zu demselben Datenblock mit einem unterschiedlichen Kanalcode (MCS1-9) kanalcodiert und/oder einem unterschiedlichen Punktierungsmuster (P1-3) punktiert sein können.

3. Verfahren nach einem der Ansprüche 1 und 2,
   **dadurch gekennzeichnet,**
   **dass** die zu treffende Entscheidung (30) hinsichtlich des Abspeicherns oder Nicht-Abspeicherns einer empfangenen Datenblock-Version (BL_AKT) in Abhängigkeit von Verwaltungsinformationen (60, 70, 80) getroffen wird, welche im Empfänger (EM) zu den in dem Speicherbereich (40) abgelegten punktierten Datenblock-Versionen geführt werden, wobei die Verwaltungsinformationen (60, 70, 80) eine Information (RX_QUAL_BL1-208) über die Qualität einer gespeicherten Datenblock-Version umfassen.

4. Verfahren nach Anspruch 3,
   **dadurch gekennzeichnet,**
   **dass** die Verwaltungsinformationen (60, 70, 80) ferner eine Information (REF_BL1-208_1-5) zur Referenzierung von weiteren gespeicherten Datenblock-Versionen zu demselben Datenblock umfassen.

5. Verfahren nach einem der Ansprüche 3 oder 4,
   **dadurch gekennzeichnet,**
   **dass** die Verwaltungsinformationen (60, 70, 80) ferner eine Information (MCS_BL1-208) umfassen, welche den verwendeten Kanalcode und/oder das verwendete Punktierungsmuster (P_BL1-208) angibt.

6. Verfahren nach einem der Ansprüche 3 bis 5,
   **dadurch gekennzeichnet,**
   **dass** die Verwaltungsinformationen (60, 70, 80) ferner eine Information (BSN_NO_BL1-208) umfassen, die den Datenblock, auf welchen die abgespeicherte Datenblock-Version zurückgeht, angibt.

7. Verfahren nach einem der Ansprüche 3 bis 6,
   **dadurch gekennzeichnet,**
   **dass** beim Abspeichern einer empfangenen Datenblock-Version (BL_AKT) eine bereits gespeicherte Datenblock-Version überschrieben wird, wobei die Wahl der zu überschreibenden, gespeicherten Datenblock-Version in Abhängigkeit von der Verwaltungsinformation (60, 70, 80) vorgenommen wird.

8. Verfahren nach einem der vorhergehenden Ansprüche,
   **dadurch gekennzeichnet,**
   **dass** im zeitlichen Mittel für jeden Datenblock nicht mehr als eine bestimmte vorgegebene Anzahl von empfangenen punktierten Datenblock-Versionen, insbesondere zwei, abspeicherbar sind.

9. Verfahren nach einem der Ansprüche 3 bis 8,
   **dadurch gekennzeichnet,**

   - **dass** die Qualität der aktuell empfangenen Datenblock-Version (BL_AKT) bestimmt wird, und
   - **dass** eine gespeicherte Datenblock-Version durch eine aktuell empfangene, demselben Datenblock zugeordnete Datenblock-Version (BL_AKT) nur dann überschrieben werden kann, wenn ein Vergleich der Qualität der empfangenen Datenblock-Version (BL_AKT) mit der Qualität der gespeicherten Datenblock-Version ergibt, dass die Qualität der aktuell empfangene Datenblock-Version (BL_AKT) um einen vorgegebenen Differenzbetrag (DIFF1, DIFF2) besser als die Qualität der gespeicherten Datenblock-Version ist.

10. Verfahren nach Anspruch 9,
    **dadurch gekennzeichnet,**

    - **dass** der Differenzbetrag für den Fall, dass die empfangene Datenblock-Version (BL_AKT) und die gespeicherte Datenblock-Version nach demselben Punktierungsmuster punktiert sind, einen ersten vorgegebenen Differenzwert (DIFF1) annimmt,
    - **dass** der Differenzbetrag für den Fall, dass die empfangene Datenblock-Version (BL_AKT) und die gespeicherte Datenblock-Version nach verschiedenen Punktierungsmustern punktiert sind, einen zweiten vorgegebenen Differenzwert (DIFF2) annimmt, und
    - **dass** der zweite vorgegebene Differenzwert (DIFF2) größer als der erste vorgegebene Differenzwert (DIFF1) ist.

11. Verfahren nach einem der Ansprüche 3 bis 10,
    **dadurch gekennzeichnet,**

    - **dass** die Qualität der aktuell empfangenen Datenblock-Version (BL_AKT) bestimmt wird, und
    - **dass** eine gespeicherte Datenblock-Version eines ersten Datenblockes durch die aktuell empfangene, einem, anderen, zweiten Datenblock zugeordnete Datenblock-Version (BL_AKT) nur dann überschrieben werden kann, wenn:

-- für den ersten Datenblock mehr Datenblock-Versionen gespeichert sind als für den zweiten Datenblock;
-- für den ersten Datenblock mehrere Datenblock-Versionen ein und desselben Punktierungsmusters Px vorliegen, das insbesondere von dem Punktierungsmuster der empfangenen Datenblock-Version verschieden ist; und
-- die Qualität der aktuell empfangenen Datenblock-Version (BL_AKT) um einen vorgegebenen dritten Differenzbetrag (DIFF3) besser als die Qualität einer gespeicherten Datenblock-Version des Punktierungsmusters Px ist.

**12.** Verfahren nach Anspruch 11,
   **dadurch gekennzeichnet,**

   - **dass** als erster Datenblock derjenige Datenblock ausgewählt wird, für welchen die meisten Datenblock-Versionen in dem Speicherbereich (40) abgespeichert sind, und
   - **dass** als die zu überschreibende gespeicherte Datenblock-Version zu diesem ersten Datenblock diejenige mit dem Punktierungsmuster Px punktierte Datenblock-Version ausgewählt wird, die die schlechteste Qualität aufweist.

**13.** Verfahren nach einem der vorhergehenden Ansprüche,
   **dadurch gekennzeichnet, dass** das Verfahren bei einer Übertragung von Datenblöcken gemäß dem EGPRS Standard eingesetzt wird.

**14.** Vorrichtung zur Verwaltung von bei wiederholten Aussendungen eines zu decodierenden Datenblockes erhaltenen Datenblock-Versionen in einem Empfänger (EM), wobei der auszusendende Datenblock im Sender (SE) einer Kanalcodierung und einer Punktierung unterzogen wird, mit

   - einem Speicherbereich (40) zum Ablegen von empfangenen Datenblock-Versionen in punktierter Form, und
   - eine Entscheidungslogik (30) zum Entscheiden, ob eine aktuell empfangene Datenblock-Version (BL_AKT) zu einem Datenblock, dessen Decodierung im Empfänger (EM) bislang fehlgeschlagen ist und auch unter Berücksichtigung der aktuell empfangenen Datenblock-Version (BL_AKT) nicht gelingt, als punktierte Datenblock-Version in dem Speicherbereich (40) abgespeichert wird oder nicht,

   **dadurch gekennzeichnet,**
   **dass** die Entscheidungslogik (30) entscheidet, die aktuell empfangene Datenblock-Version (BL_AKT) auf einem freien Speicherplatz abzuspeichern, sofern ein solcher verfügbar ist, andernfalls entscheidet, ob die aktuell empfangene Datenblock-Version (BL_AKT) durch Überschreiben einer Datenblock-Version desselben Datenblockes abgespeichert werden soll, und sofern diese Entscheidung negativ ausfällt, entscheidet, ob die aktuell empfangene Datenblock-Version durch Überschreiben einer Datenblock-Version eines anderen Datenblockes abgespeichert werden kann, wobei, wenn auch diese Entscheidung negativ ausfällt, das Verwerfen der aktuell empfangenen Datenblock-Version (BL_AKT) entschieden wird.

**15.** Vorrichtung nach Anspruch 14,
   **dadurch gekennzeichnet,**
   **dass** in dem Speicherbereich (40) abgelegte Datenblock-Versionen zu demselben Datenblock mit einem unterschiedlichen Kanalcode (MCS1-9) kanalcodiert und/oder einem unterschiedlichen Punktierungsmuster (P1-3) punktiert sein können.

**16.** Vorrichtung nach Anspruch 14 oder 15,
   **gekennzeichnet durch**
   eine dem Speicherbereich (40) zugeordnete Verwaltungsinformations-Tabelle (60, 70, 80), in welcher zu jeder gespeicherten punktierten Datenblock-Version Verwaltungsinformationen eingetragen sind, wobei die Tabelle (60, 70, 80) einen Eintrag für eine Information über die Qualität (RX_QUAL_BL1-208) der Datenblock-Version umfasst.

**17.** Vorrichtung nach Anspruch 16,
   **dadurch gekennzeichnet,**
   **dass** die Verwaltungsinformations-Tabelle (60, 70, 80) ferner einen Eintrag (REF_BL1-208_1-5) für Information zur Referenzierung von weiteren gespeicherten Datenblock-Versionen zu demselben Datenblock umfasst.

**18.** Vorrichtung nach einem der Ansprüche 16 oder 17,

**dadurch gekennzeichnet,**
**dass** die Verwaltungsinformations-Tabelle (60, 70, 80) ferner einen Eintrag (MCS_BL1-208) für Information umfasst, welche den verwendeten Kanalcode (MCS1-9) und/oder das verwendete Punktierungsmuster (P1-3) angibt.

**19.** Vorrichtung nach einem der Ansprüche 16 bis 18,
**dadurch gekennzeichnet,**
**dass** die Verwaltungsinformations-Tabelle (60, 70, 80) ferner einen Eintrag (BSN_NO_BL1-208) für Information umfasst, die den Datenblock, auf welchen die abgespeicherte Datenblock-Version zurückgeht, angibt.

**20.** Vorrichtung nach einem der Ansprüche 16 bis 19,
**dadurch gekennzeichnet,**
**dass** die Entscheidungslogik (30) auf Einträge der Verwaltungsinformations-Tabelle (60, 70, 80) zugreift und ihre Entscheidung in Abhängigkeit von den erhaltenen Verwaltungsinformationen trifft.

**21.** Vorrichtung nach einem der Ansprüche 14 bis 20,
**dadurch gekennzeichnet,**
**dass** die Größe des Speicherbereichs (40) so gewählt ist, dass für jeden Datenblock im zeitlichen Mittel nicht mehr als eine bestimmte vorgegebene Anzahl von empfangenen punktierten Datenblock-Versionen, insbesondere zwei, abspeicherbar sind.

**22.** Vorrichtung einem der Ansprüche 14 bis 21,
**dadurch gekennzeichnet,**
**dass** die Entscheidungslogik (30) umfasst:

- ein Mittel zum Auswählen einer gespeicherten Datenblock-Version,
- ein Mittel zum Berechnen einer Qualitätsdifferenz zwischen der Qualität der aktuell empfangenen Datenblock-Version (BL_AKT) und der aus der Verwaltungsinformations-Tabelle (60, 70, 80) bezogenen Qualität der ausgewählten gespeicherten Datenblock-Version, und
- ein Mittel zum Bewerten der Qualitätsdifferenz.

**Claims**

**1.** Method for managing data block versions obtained from repeat transmissions of a data block which is to be decoded in a receiver (EM), the data block to be transmitted being subjected to channel coding (1) and puncturing (2) in the transmitter (SE), having the following steps:

- a memory area (40) is provided for storing received data block versions in punctured form; and
- a decision (30) is made regarding whether or not a currently received data block version (BL_AKT) for a data block whose decoding in the receiver (EM) has failed to date and is also unsuccessful when the currently received data block version (BL_AKT) is taken into account is stored as a punctured data block version in the memory area (40)

**characterized in that** the decision is made by
the following decision steps:

- the currently received data block version (BL_AKT) is stored if free memory space is available; otherwise
- a decision is made regarding whether the currently received data block version (BL_AKT) can be stored by overwriting a data block version of the same data block; if this is not possible,
- a decision is made regarding whether the currently received data block version (BL_AKT) can be stored by over-writing a data block version of a different data block; otherwise
- the currently received data block version (BL_AKT) is rejected.

**2.** Method according to Claim 1,
**characterized**
**in that** data block versions stored in the memory area (40) for the same data block can be channel coded using a different channel code (MCS1-9) and/or can be punctured using a different puncturing pattern (P1-3).

**3.** Method according to either of Claims 1 and 2,
**characterized**
**in that** the decision (30) to be made regarding the storage or nonstorage of a received data block version (BL_AKT) is made on the basis of management information (60, 70, 80) which is held in the receiver (EM) for the punctured data block versions stored in the memory area (40), the management information (60, 70, 80) comprising information (RX_QUAL_BL1-208) about the quality of a stored data block version.

**4.** Method according to Claim 3,
**characterized**
**in that** the management information (60, 70, 80) also comprises information (REF_BL1-208_1-5) for referencing further stored data block versions for the same data block.

**5.** Method according to either of Claims 3 and 4,
**characterized**
**in that** the management information (60, 70, 80) also comprises information (MCS_BL1-208) which indicates the channel code used and/or the puncturing pattern used (P_BL1-208).

**6.** Method according to one of Claims 3 to 5,
**characterized**
**in that** the management information (60, 70, 80) also comprises information (BSN_NO_BL1-208) which indicates the data block to which the stored data block version can be attributed.

**7.** Method according to one of Claims 3 to 6,
**characterized**
**in that** storing a received data block version (BL_AKT) involves overwriting an already stored data block version, the stored data block version to be overwritten being chosen on the basis of the management information (60, 70, 80).

**8.** Method according to one of the preceding claims,
**characterized**
**in that** no more than a particular prescribed number of received punctured data block versions, particularly two, can be stored on average over time for each data block.

**9.** Method according to one of Claims 3 to 8,
**characterized**

- **in that** the quality of the currently received data block version (BL_AKT) is determined, and
- **in that** a stored data block version can be overwritten by a currently received data block version (BL_AKT) associated with the same data block only if a comparison between the quality of the received data block version (BL_AKT) and the quality of the stored data block version reveals that the quality of the currently received data block version (BL_AKT) is a prescribed differential (DIFF1, DIFF2) better than the quality of the stored data block version.

**10.** Method according to Claim 9,
**characterized**

- **in that** the differential assumes a first prescribed difference value (DIFF1) if the received data block version (BL_AKT) and the stored data block version have been punctured using the same puncturing pattern,
- **in that** the differential assumes a second prescribed difference value (DIFF2) if the received data block version (BL_AKT) and the stored data block version have been punctured using different puncturing patterns, and
- **in that** the second prescribed difference value (DIFF2) is greater than the first prescribed difference value (DIFF1).

**11.** Method according to one of Claims 3 to 10,
**characterized**

- **in that** the quality of the currently received data block version (BL_AKT) is determined, and
- **in that** a stored data block version of a first data block can be overwritten by the currently received data block version (BL_AKT) associated with a different, second data block only if:

- - more data block versions are stored for the first data block than for the second data block;
- - the first data block has a plurality of data block versions having one and the same puncturing pattern Px, which is different, in particular, than the puncturing pattern of the received data block version; and
- - the quality of the currently received data block version (BL_AKT) is a prescribed third differential (DIFF3) better than the quality of a stored data block version having the puncturing pattern Px.

12. Method according to Claim 11,
**characterized**

- **in that** the first data block selected is that data block for which most data block versions are stored in the memory area (40), and
- **in that** this first data block's stored data block version to be overwritten which is selected is that data block version punctured using the puncturing pattern Px which has the poorest quality.

13. Method according to one of the preceding claims,
**characterized**
**in that** the method is used for transmitting data blocks based on the EGPRS standard.

14. Apparatus for managing data block versions obtained from repeat transmissions of a data block which is to be decoded in a receiver (EM), the data block to be transmitted being subjected to channel coding and puncturing in the transmitter (SE), having

- a memory area (40) for storing received data block versions in punctured form, and
- a decision logic unit (30) for deciding whether or not a currently received data block version (BL_AKT) for a data block whose decoding in the receiver (EM) has failed to date and is also unsuccessful when the currently received data block version (BL_AKT) is taken into account is stored as punctured data block version in the memory area (40)

**characterized**
**in that** the decision logic unit (30) decides to store the currently received data block version (BL_AKT) in a free memory space if such a memory space is available, otherwise it decides whether the currently received data block version (BL_AKT) is to be stored by overwriting a data block version of the same data block, and if the result of this decision is negative it decides whether the currently received data block version can be stored by overwriting a data block version of a different data block, with a decision being made to reject the currently received data block version (BL_AKT) if the result of this decision is also negative.

15. Apparatus according to Claim 14,
**characterized**
**in that** data block versions stored in the memory area (40) for the same data block can be channel coded using a different channel code (MCS1-9) and/or can be punctured using a different puncturing pattern (P1-3).

16. Apparatus according to Claim 14 or 15,
**characterized by**
a management information table (60, 70, 80) which is associated with the memory area (40) and contains management information for each stored punctured data block version, the table (60, 70, 80) comprising an entry for information about the quality (RX_QUAL_BL1-208) of the data block version.

17. Apparatus according to Claim 16,
**characterized**
**in that** the management information table (60, 70, 80) also comprises an entry (REF_BL1-208_1-5) for information for referencing further stored data block versions for the same data block.

18. Apparatus according to either of Claims 16 and 17,
**characterized**
**in that** the management information table (60, 70, 80) also comprises an entry (MCS_BL1-208) for information which indicates the channel code used (MCS1-9) and/or the puncturing pattern used (P1-3).

19. Apparatus according to one of Claims 16 to 18,

**characterized**
**in that** the management information table (60, 70, 80) also comprises an entry (BSN_NO_BL1-208) for information which indicates the data block to which the stored data block version can be attributed.

20. Apparatus according to one of Claims 16 to 19,
   **characterized**
   **in that** the decision logic unit (30) accesses entries in the management information table (60, 70, 80) and makes its decision on the basis of the management information obtained.

21. Apparatus according to one of Claims 14 to 20,
   **characterized**
   **in that** the size of the memory area (40) has been chosen such that no more than a particular prescribed number of received punctured data block versions, particularly two, can be stored for each data block on average over time.

22. Apparatus according to one of Claims 14 to 21,
   **characterized**
   **in that** the decision logic unit (30) comprises:

   - a means for selecting a stored data block version,
   - a means for calculating a quality difference between the quality of the currently received data block version (BL_AKT) and the quality of the selected stored data block version, which is taken from the management information table (60, 70, 80), and
   - a means for assessing the quality difference.

**Revendications**

1. Procédé de gestion de versions de bloc de données obtenues lors d'envois répétés d'un bloc de données à décoder dans un récepteur (EM), le bloc de données à envoyer étant soumis dans l'émetteur (SE) à un codage de canal (1) et à un pointillage (2), le procédé comportant les étapes consistant à :

   - prévoir une zone de mémoire (40) pour stocker des versions de bloc de données reçues sous forme pointillée ; et
   - décider (30) si une version de bloc de données actuellement reçue (BL_AKT), relative à un bloc de données dont le décodage dans le récepteur (EM) a échoué jusqu'à présent et n'a pas plus de succès en tenant compte de la version de bloc de données actuellement reçue (BL_AKT), est mémorisée ou non en tant que version de bloc de données pointillée dans la zone de mémoire (40),

   **caractérisé en ce que** la décision est prise en suivant les étapes de décision suivantes consistant à :

   - mémoriser la version de bloc de données actuellement reçue (BL_AKT) lorsque l'on dispose de place mémoire libre ; sinon
   - décider si la version de bloc de données actuellement reçue (BL_AKT) peut être mémorisée en écrivant par-dessus une version de bloc de données du même bloc de données ; si ce n'est pas possible,
   - décider si la version de bloc de données actuellement reçue (BL_AKT) peut être mémorisée en écrivant par-dessus une version de bloc de données d'un autre bloc de données ; sinon
   - rejeter la version de bloc de données actuellement reçue (BL_AKT).

2. Procédé selon la revendication 1, **caractérisé en ce que** des versions de bloc de données, relative au même bloc de données et mémorisées dans la zone de mémoire (40), peuvent être soumises à un codage de canal avec un code de canal différent (MCS1-9) et/ou à un pointillage avec une trame de pointillage différente (P1-3).

3. Procédé selon l'une des revendications 1 et 2, **caractérisé en ce que** la décision à prendre (30), concernant la mémorisation ou non d'une version de bloc de données reçue (BL-AKT), est prise en fonction d'informations de gestion (60, 70, 80) qui sont amenées dans le récepteur (EM) aux versions de bloc de données pointillées mémorisées dans la zone de mémoire (40), les informations de gestion (60, 70, 80) comportant une information (RX_QUAL_BL1-208) sur la qualité d'une version de bloc de données mémorisée.

4. Procédé selon la revendication 3, **caractérisé en ce que** les informations de gestion (60, 70, 80) comporte en outre une information (REF_BL1-208_1-5) de référencement d'autres versions de bloc de données mémorisées relatives au même bloc de données.

5. Procédé selon l'une des revendications 3 ou 4, **caractérisé en ce que** les informations de gestion (60, 70, 80) comporte en outre une information (MCS_BL1-208) qui indique le code de canal utilisé et/ou la trame de pointillage utilisé (P_BL1-208).

6. Procédé selon l'une des revendications 3 à 5, **caractérisé en ce que** les informations de gestion (60, 70, 80) comporte en outre une information (BSN_NO_BL1-208) qui indique le bloc de données auquel se rapporte la version de bloc de données mémorisée.

7. Procédé selon l'une des revendications 3 à 6, **caractérisé en ce que** l'on écrit par-dessus une version de bloc de données déjà mémorisée lors de la mémorisation d'une version de bloc de données reçue (BL_AKT), le choix de la version de bloc de données mémorisée, par-dessus laquelle on va écrire, étant effectué en fonction de l'information de gestion (60, 70, 80).

8. Procédé selon l'une des revendications précédentes,
**caractérisé en ce que**, en moyenne dans le temps, l'on ne peut pas mémoriser plus d'un certain nombre prescrit de versions de bloc de données pointillées reçues, notamment deux.

9. Procédé selon l'une des revendications 3 à 8, **caractérisé en ce que**

- l'on détermine la qualité de la version de bloc de données actuellement reçue (BL_AKT), et
- on n'écrit, par-dessus une version de bloc de données mémorisée, une version de bloc de données actuellement reçue (BL-AKT), associée au même bloc, que lorsqu'une comparaison de la qualité de la version de bloc de données reçue (BL_AKT) avec la qualité de la version de bloc de données mémorisée indique que la qualité de la version de bloc de données actuellement reçue (BL_AKT) est meilleure, d'une valeur de différence prescrite (DIFF1, DIFF2), que la qualité de la version de bloc de données mémorisée.

10. Procédé selon la revendication 9, **caractérisé en ce que**

- la valeur de différence, dans le cas où la version de bloc de données reçue (BL_AKT) et la version de bloc de données mémorisée sont pointillées avec la même trame de pointillage, prend une première valeur de différence prescrite (DIFF1),
- la valeur de différence, dans le cas où la version de bloc de données reçue (BL-AKT) et la version de bloc de données mémorisée sont pointillées avec des trames de pointillage différentes, prend une deuxième valeur de différence prescrite (DIFF2), et
- la deuxième valeur de différence prescrite (DIFF2) est supérieure à la première valeur de différence prescrite (DIFF1).

11. Procédé selon l'une des revendications 3 à 10, **caractérisé en ce que**

- l'on détermine la qualité de la version de bloc de données actuellement reçue (BL-AKT), et
- l'on n'écrit, par-dessus une version de bloc de données mémorisée d'un premier bloc de données, la version de bloc de données actuellement reçue (BL_AKT), associée à un deuxième bloc de données, que lorsque :

-- l'on mémorise pour le premier bloc de données plus de versions de bloc de données que pour le deuxième bloc de données ;
-- il existe pour le premier bloc de données plusieurs versions de bloc de données de même trame de pointillage Px qui est notamment différente de la trame de pointillage de la version de bloc de données reçue ; et
-- la qualité de la version de bloc de données actuellement reçue (BL_AKT) est meilleure que la qualité d'une version de bloc de données mémorisée de trame de pointillage Px.

12. Procédé selon la revendication 11, **caractérisé en ce que**

- l'on choisit comme premier bloc de données le bloc de données pour lequel la plupart des versions de bloc de données sont mémorisées dans la zone de mémoire (40), et

- l'on choisit comme version de bloc de données mémorisée, relative à ce premier bloc de données et par-dessus laquelle on va réécrire, la version de bloc de données, pointillée avec la trame de pointillage Px, qui a la moins bonne qualité.

**13.** Procédé selon l'une des revendications précédentes, **caractérisé en ce que** le procédé est utilisé lors d'une transmission de blocs de données selon la norme EGPRS.

**14.** Dispositif de gestion de versions de bloc de données obtenues lors d'émissions répétées d'un bloc de données à décoder dans un récepteur (EM), le bloc de données à envoyer étant soumis dans l'émetteur (SE) à un codage de canal et à un pointillage, le dispositif comportant

- une zone de mémoire (40) destinée à mémoriser des versions de bloc de données reçues sous forme pointillée, et
- une logique de décision (30) permettant de décider si une version de bloc de données actuellement reçue (BL-AKT, relative à un bloc de données dont le décodage dans le récepteur (EM) a échoué jusqu'à présent et n'a pas plus de succès en tenant compte de la version de bloc de données actuellement reçue (BL_AKT), est mémorisée ou non en tant que version de bloc de données pointillée dans la zone de mémoire (40),

**caractérisé en ce que** la logique de décision (30) décide de mémoriser la version de bloc de données actuellement reçue (BL_AKT) à une place mémoire libre, lorsque l'on en dispose, sinon elle décide si la version de bloc de données actuellement reçue (BL_AKT) peut être mémorisée en écrivant par-dessus une version de bloc de données du même bloc de données, et si cette décision ne fonctionne pas, elle décide si la version de bloc de données actuellement reçue (BL_AKT) peut être mémorisée en écrivant par-dessus une version de bloc de données d'un autre bloc de données, sinon le rejet de la version de bloc de données actuellement reçue (BL_AKT) est décidé.

**15.** Dispositif selon la revendication 14, **caractérisé en ce que** des versions de bloc de données, relatives au même bloc de données et mémorisées dans la zone de mémoire (40), peuvent être soumises à un codage de canal avec un code de canal différent (MCS1-9) et/ou à un pointillage avec une trame de pointillage différente (P1-3).

**16.** Dispositif selon la revendication 14 ou 15, **caractérisé par** une table d'informations de gestion (60, 70, 80 qui est associée à la zone de mémoire (40) et dans laquelle des informations de gestion sont entrées pour chaque version de bloc de données pointillée mémorisée, la table (60, 70, 80) comportant une entrée destinée à une information relative à la qualité (RX_QUAL_BL1-208) de la version de bloc de données.

**17.** Dispositif selon la revendication 16, **caractérisé en ce que** la table d'informations de gestion (60, 70, 80) comporte en outre une entrée (REF_BL1-208_1-5) destinée à l'information de référencement d'autres versions de bloc de données mémorisées relatives au même bloc de données.

**18.** Dispositif selon l'une des revendications 16 ou 17, **caractérisé en ce que** la table d'informations de gestion (60, 70, 80) comporte en outre une entrée (MCS_BL1-208) destinée à l'information qui indique le code de canal utilisé (MCS1-9) et/ou la trame de pointillage utilisée (P1-3).

**19.** Dispositif selon l'une des revendications 16 à 18, **caractérisé en ce que** la table d'informations de gestion (60, 70, 80) comporte en outre une entrée (BSN_NO_BL1-208) destinée à l'information qui indique le bloc de données auquel se rapporte la version de bloc de données mémorisée.

**20.** Dispositif selon l'une des revendications 16 à 19, **caractérisé en ce que** la logique décision (30) accède à des entrées de la table d'informations de gestion (60, 70, 80) et prend sa décision en fonction des informations de gestion obtenues.

**21.** Dispositif selon l'une des revendications 14 à 20, **caractérisé en ce que** la taille de la zone de mémoire (40) est choisie de telle sorte que, en moyenne dans le temps, l'on ne peut pas mémoriser plus d'un certain nombre prescrit de versions de bloc de données pointillées reçues, notamment deux.

**22.** Dispositif selon l'une des revendications 14 à 21, **caractérisé en ce que** la logique décision (30) comporte :

- un moyen de sélection d'une version de bloc de données mémorisée,
- un moyen de calcul d'une différence de qualité entre la qualité de la version de bloc de données actuellement reçue (BL_AKT) et la qualité, obtenue du tableau d'informations de gestion (60, 70, 80), de la version de bloc de données mémorisée sélectionnée, et

- un moyen d'évaluation de la différence de qualité.

FIG. 1
Stand der Technik

FIG. 2

FIG. 3

```
              ┌─────────────────────────┐
              │    NEUE DATENBLOCK-      │──S1
              │  VERSION ZU SPEICHERN    │
              └─────────────────────────┘
                          │
                          ▼
       ┌──────────────────────────────────────┐
       │   SUCHE NACH FREIEM SPEICHERPLATZ     │──S2
       └──────────────────────────────────────┘
                          │
                          ▼
    NEIN              ╱◇◇◇◇◇◇╲ ──S3
   ◄──────────────── │  VOLL  │
                      ╲  ?   ╱
                       ◇◇◇◇◇◇
                          │ JA
                          ▼
       ┌──────────────────────────────────────┐
       │ SUCHE NACH ÜBERSCHREIBBARER DB.-      │──S4
       │ VERSION DESSELBEN DATENBLOCKS         │
       └──────────────────────────────────────┘
                          │
                          ▼
    JA                ╱◇◇◇◇◇◇╲ ──S5
   ◄──────────────── │ ERFOLG │
                      ╲  ?   ╱
                       ◇◇◇◇◇◇
                          │ NEIN
                          ▼
       ┌──────────────────────────────────────┐
       │ SUCHE NACH ÜBERSCHREIBBARER DB.-      │──S6
       │ VERSION EINES ANDEREN DATENBLOCKS     │
       └──────────────────────────────────────┘
                          │
                          ▼
    JA                ╱◇◇◇◇◇◇╲      NEIN
   ◄──────────────── │ ERFOLG │────────────────►
                      ╲  ?   ╱──S7
                       ◇◇◇◇◇◇
                          │
                          ▼
  S8──┌──────────────────────────────────────┐
      │    AKTUALISIERE VERWALTUNGSINFO       │
      └──────────────────────────────────────┘
                          │
                          ▼
  S9──┌──────────────────────────────────────┐
      │    SPEICHERE DIE DATENBLOCK-VERSION   │
      └──────────────────────────────────────┘
                          │
                          ▼
 S10──┌──────────────────────────────────────┐
      │       INFORMIERE CONTROLLER           │
      └──────────────────────────────────────┘
                                               │
                                               ▼
                                          MITTEILUNG
                                          AN SENDER
```

# Fig. 4

SUCHE NACH DB.-VERSIONEN
DESSELBEN DATENBLOCKES — S11

SUCHE DER DATENBLOCK-VERSION
DERSELBEN PUNKTIERUNG P MIT
GERINGSTER QUALITÄT — S12

JA ← VGL ? — S13

NEIN

SUCHE DER DATENBLOCK-VERSION — S14
EINER ANDEREN PUNKTIERUNG P
MIT GERINGSTER QUALITÄT

JA ← VGL ? — S15

NEIN

WEITERE P´s ? — S16 JA

NEIN

S18 — AKTIVIERE
ÜBERSCHREIBEN

## Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0143331 A1

**In der Beschreibung aufgeführte Nicht-Patentliteratur**

- **VON R. ZARITS.** Datenbeschleuniger für Mobilfunk-Netze. *Funkschau Nr. 46,* Oktober 2001, 46-48